# EUROPÄISCHE PATENTSCHRIFT

(11) **EP 1 251 363 B1**
(45) Veröffentlichungstag und Bekanntmachung des Hinweises auf die Patenterteilung: **27.04.2005**
(21) Anmeldenummer: 02004977.1
(22) Anmeldetag: 06.03.2002
(51) Int. Cl.: G01S 17/32, G01S 7/497, G01S 7/493

(54) **Verarbeitungsverfahren für ein Frequenzsignal**
Processing method for a frequency signal
Procédé de traitement d'un signal de fréquence

(30) Priorität: 20.04.2001 DE 10119693; 18.02.2002 DE 10206858
(43) Veröffentlichungstag der Anmeldung: 23.10.2002
(73) Patentinhaber: KROHNE MESSTECHNIK GMBH & CO. KG, 47058 Duisburg (DE)
(72) Erfinder: Schiek, Burkhard, Prof. Dr.-Ing., 44801 Bochum (DE); Much, Thomas, Dipl.-Ing., 45481 Mülheim (DE); Küppers, Michael, Dipl.-Ing., 45219 Essen (DE); Wegemann, Uwe, Dipl.-Ing., 45549 Sprockhövel (DE); Brumbi, Detlef, Dr., 47447 Moers (DE)
(74) Vertreter: Gesthuysen, von Rohr & Eggert

(56) Entgegenhaltungen:
- EP-A- 0 692 705
- DE-A- 4 420 432
- DE-A- 19 610 502
- US-A- 4 052 889
- US-A- 4 770 526

## Beschreibung

Die Erfindung betrifft ein Verarbeitungsverfahren für ein Frequenzsignal, insbesondere zur Verwendung für die Auswertung einer Entfernungsmessung mittels gepulster elektromagnetischer Wellen bzw. mittels zeitlich kontinuierlicher, frequenzmodulierter elektromagnetischer Wellen auf der Grundlage des Radarprinzips. Die Erfindung betrifft ferner ein Entfernungsmeßgerät, das einen Sender, einen Empfänger, eine vom Sender zum Empfänger verlaufende Meßstrecke und wenigstens eine vom Sender zum Empfänger verlaufende Referenzstrecke aufweist.

Mit Frequenzsignal wird vorliegend ein Signal R (w) bezeichnet, das ein Frequenzspektrum beschreibt, gegeben durch die Amplitude R in Abhängigkeit von der Frequenz ω. Dementsprechend wird vorliegend unter Zeitsignal ein solches Signal r (t) verstanden, das gegeben ist durch die Amplitude r in Abhängigkeit von der Zeit t.

Zur berührungslosen Abstands- bzw. Füllstandsmessung sind aus dem Stand der Technik verschiedene Verfahren unter Ausnutzung akustischer oder elektromagnetischer Wellen bekannt. Dabei werden die akustischen oder elektromagnetischen Wellen von einem Sender in Richtung zu einem Ziel ausgesandt, am Ziel reflektiert und von einem Empfänger wieder empfangen. Somit werden für eine Füllstandsmessung z. B. elektromagnetische Wellen von einem Sender vertikal in einen Behälter ausgesandt, an der Oberfläche des in dem Behälter gelagerten Mediums reflektiert und von einem Empfänger wieder empfangen. Aus der Laufzeit des ausgesandten und reflektierten Signals kann dann die Entfernung vom Sender bzw. vom Empfänger zur Oberfläche des Mediums direkt oder indirekt bestimmt werden. Zur direkten Bestimmung der Entfernung bedient man sich z. B. eines Impulsverfahrens, bei dem zur Entfernungsmessung ein aus kurzen Impulsen bestehendes Signal verwendet wird. Aufgrund der Tatsache, daß die Laufzeiten des Signals sehr kurz sind, ist eine direkte Zeitmessung praktisch ausgeschlossen, so daß man sich eines Sampling-Verfahrens bedient. Eine indirekte Entfernungsbestimmung kann z. B. mit Hilfe eines solchen Verfahrens erfolgen, bei dem ein frequenzmoduliertes, zeitlich kontinuierliches, hochfrequentes Zeitsignal verwendet wird (Frequency Modulated Continuous Wave, kurz FMCW). Dabei wird in aufeinanderfolgenden Frequenz-Sweeps die Frequenz des Signals jeweils z. B. linear vergrößert, so daß die Laufzeit eines zurückreflektierten Signals über die Differenzfrequenz zu der Frequenz bestimmt werden kann, die der Frequenz-Sweep zum Zeitpunkt der Rückreflektion erreicht hat. Ein entsprechendes Zeitsignal mit der niederfrequenten Differenzfrequenz wird typischerweise über einen Mischer erzeugt, dem einerseits das Sweep-Signal und andererseits das rückreflektierte Signal zugeführt werden.

Um die Genauigkeit und die Zuverlässigkeit einer solchen Entfernungsmessung mit Hilfe reflektierter Wellen zu erhöhen, kann ein Referenzsignal verwendet werden, das eine vorbestimmte, bekannte Referenzstrecke durchläuft. Dieses Referenzsignal dient dann als Normierung bzw. Kalibrierung für das die eigentliche Meßstrecke vom Sender über die Reflektionsoberfläche zurück zum Empfänger durchlaufende Nutzsignal. Aus der US 4,665,403 ist z. B. ein mit Mikrowellen arbeitendes Füllstandsmeßgerät bekannt, das eine Referenzstrecke in Form einer Referenzleitung aufweist, in die das ausgesandte Signal eingekoppelt wird und an deren Ende eine Reflektion erfolgt, so daß ein Referenzsignal für eine vorbestimmte bekannte Laufstrecke erzeugt wird. Es ist jedoch auch möglich, daß die gesamte Referenzstrecke einen Teil der Meßstrekke bildet, so daß innerhalb der Meßstrecke z. B. ein teildurchlässiger Reflektor vorgesehen ist, der einen Teil des ausgesandten Signals reflektiert bevor dieses auf die Oberfläche fällt, von der es im wesentlichen vollständig zurückreflektiert wird. Diesbezüglich wird exemplarisch auf die DE 42 40 491 C2 verwiesen. Bezüglich der Auswertung des Nutzsignals im Zeit - oder Frequenzbereich wird auf die US 4,052,889 hingewiesen.

Die aus dem Stand der Technik bekannten Vorgehensweisen sind jedoch mit verschiedenen Problemen behaftet. Für eine sehr präzise Entfernungsmessung reicht eine einfache Anordnung ohne Referenzstrecke häufig nicht aus. Bei den bekannten Verfahren unter Verwendung einer Referenzstrecke ist jedoch die Einbeziehung des Referenzsignals in die Auswertung oft schwierig. Insbesondere erschweren nichtideale Impulsformen beim Impulsverfahren bzw. Dispersionen und Amplitudengang beim FMCW-Verfahren die Auswertung, so daß die Genauigkeit und Verläßlichkeit der Entfernungsbestimmung teilweise unzureichend ist.

Dementsprechend ist es die Aufgabe der Erfindung, ein solches Verarbeitungsverfahren für ein Frequenzsignal sowie ein entsprechendes Entfernungsmeßgerät anzugeben, mit denen die zuvor genannten Probleme vermieden bzw. kompensiert werden.

Das erfindungsgemäße Verarbeitungsverfahren für ein Frequenzsignal, mit dem die zuvor hergeleitete und aufgezeigte Aufgabe gelöst ist, ist dadurch gekennzeichnet, daß das Frequenzsignal in wenigstens zwei Frequenzbereiche, entsprechend zwei Hauptkomponenten des Frequenzsignals, aufgeteilt wird, das Frequenzsignal in den beiden Frequenzbereichen jeweils einer separaten Fourier-Transformation unterzogen wird, wodurch die Fourier-Transformierte des Frequenzsignals in dem einen Frequenzbereich, entsprechend einem ersten komplexen Zeitsignal, und die Fourier-Transformierte des Frequenzsignals in dem anderen Frequenzbereich, entsprechend einem zweiten komplexen Zeitsignal, erzeugt werden, das zweite Zeitsignal durch das erste Zeitsignal komplex dividiert wird, wodurch ein drittes Zeitsignal erzeugt wird, und das dritte Zeitsignal einer Fourier-Transformation unterzogen wird, wodurch ein verarbeitetes Frequenzsignal erzeugt wird.

Das zuvor beschriebene, erfindungsgemäße Verarbeitungsverfahren für ein Frequenzsignal kann bei der Auswertung einer Entfernungsmessung mit Hilfe des weiter oben beschriebenen Impulsverfahrens direkt angewandt werden. Soll eine Entfernungsmessung unter Verwendung des ebenfalls weiter oben beschriebenen FMCW-Verfahrens durchgeführt werden, ist ein zusätzlicher Schritt erforderlich. Bei der Verwendung des FMCW-Verfahrens steht nämlich zuerst ein Zeitsignal zur Verfügung, und zwar das im Mischer erzeugte niederfrequente Signal, aus dem mittels Fourier-Transformation zuerst ein Frequenzsignal ermittelt werden muß.

Somit ist das erfindungsgemäße Verarbeitungsverfahren für ein Frequenzsignal zwar vielseitig anwendbar, gemäß einer bevorzugten Weiterbildung der Erfindung ist jedoch vorgesehen, daß das Verfahren für die Auswertung einer Entfernungsmessung mittels gepulster elektromagnetischer Wellen bzw. mittels zeitlich kontinuierlicher frequenzmodulierter elektromagnetischer Wellen auf der Grundlage des Radarprinzips verwendet wird. In diesem Zusammenhang ist vorzugsweise ferner vorgesehen, daß das Frequenzsignal ein Nutzsignal, entsprechend der Laufzeit längs einer Meßstrecke, und ein Referenzsignal, entsprechend der Laufzeit längs einer Referenzstrecke, umfaßt und die beiden Hauptkomponenten des Frequenzsignals dem Nutzsignal bzw. dem Referenzsignal entsprechen. Dabei dient das Nutzsignal, das von einem Sender ausgesandt, an einer Oberfläche reflektiert und von einem Empfänger wieder empfangen wird, zur eigentlichen Bestimmung der Entfernung. Die Normierung bzw. Kalibrierung dieses Nutzsignals erfolgt durch das Referenzsignal, das durch das Durchlaufen einer bekannten vorbestimmten Referenzstrecke erhalten wird.

Es hat sich herausgestellt, daß das erfindungsgemäße Verfahren besonders präzise und verläßliche Ergebnisse liefert, wenn das Maximum des Nutzsignals vom Maximum des Referenzsignals um wenigstens die Halbwertsbreite des Nutzsignals bzw. des Referenzsignals beabstandet ist. Vorzugsweise ist das Maximum des Nutzsignals vom Maximum des Referenzsignals sogar um wenigstens die Breite bei 10 % der Höhe des Nutzsignals bzw. des Referenzsignals beabstandet. Ganz besonders bevorzugt ist das Maximum des Nutzsignals vom Maximum des Referenzsignals um ein Vielfaches, vorzugsweise um wenigstens das Fünffache, der Breite bei 10 % der Höhe des Nutzsignals bzw. des Referenzsignals beabstandet.

Das erfindungsgemäße Verarbeitungsverfahren für ein Frequenzsignal ist außerdem vorzugsweise dadurch weitergebildet, daß eine große Signalbandbreite Verwendung findet. Vorzugsweise ist nämlich eine Modulationsbandbreite des Frequenzsignals von wenigstens 500 MHz vorgesehen. Dazu ist bei Verwendung eines Impulsverfahrens eine hinreichend kurze Pulsdauer erforderlich, während bei Verwendung eines FMCW-Verfahrens ein entsprechend großer Frequenzhub verwendet werden muß.

Grundsätzlich ist das erfindungsgemäße Verarbeitungsverfahren für ein Frequenzsignal nicht auf einen bestimmten Frequenzbereich elektromagnetischer Wellen beschränkt. Gemäß einer bevorzugten Weiterbildung der Erfindung ist jedoch vorgesehen, daß als elektromagnetische Wellen Licht, insbesondere im sichtbaren oder im infraroten Spektralbereich, verwendet wird. Dabei ist gemäß einer bevorzugten Weiterbildung der Erfindung vorgesehen, daß die Referenzstrecke durch die Reflektion des Lichtes an einer Linsenoberfläche gebildet wird. Bei der Verwendung von Licht, insbesondere im sichtbaren oder im infraroten Spektralbereich, als elektromagnetische Wellen ist gemäß einer anderen bevorzugten Weiterbildung der Erfindung vorgesehen, daß die Meßstrecke und/oder die Referenzstrecke wenigstens teilweise als Lichtwellenleiter ausgeführt sind. Grundsätzlich gilt bei der Verwendung von Licht als elektromagnetische Wellen, daß die weiter oben angesprochene Frequenzmodulation nicht nur eine Modulation der Frequenz des Lichtes meint. Vielmehr kann auch die Lichtintensität frequenzmoduliert sein, so daß das Licht als "modulierter Träger" wirkt.

Gemäß einer anderen bevorzugten Weiterbildung der Erfindung ist vorgesehen, daß als elektromagnetische Wellen Mikrowellen verwendet werden, die über eine gemeinsame Sende- und Empfangsantenne ausgesandt und empfangen werden oder über eine Sendeantenne ausgesandt und über eine Empfangsantenne empfangen werden. Dabei ist gemäß einer bevorzugten Weiterbildung der Erfindung vorgesehen, daß die Referenzstrecke durch die Reflektion der Mikrowellen an einer vorbestimmten Stelle der Sende- und Empfangsantenne bzw. der Sendeantenne gebildet wird. Besonders bevorzugt wird die vorbestimmte Stelle der Sende- und Empfangsantenne bzw. der Sendeantenne von dem Ende der Sende- und Empfangsantenne bzw. der Sendeantenne gebildet, da an diesem Ende aufgrund des nichtidealen Impedanzabschlusses eine teilweise Reflektion des ausgesandten Signals erfolgt.

Das erfindungsgemäße Entfernungsmeßgerät, mit dem die weiter oben hergeleitete und aufgezeigte Aufgabe gelöst ist, ausgehend von dem eingangs beschriebenen Entfernungsmeßgerät, gemäß einer ersten Lehre der Erfindung dadurch gekennzeichnet, daß die Meßstrecke eine Verzögerungsstrecke aufweist. Zur deutlichen Trennung des Nutzsignals vom Referenzsignal wird somit eine zeitliche Trennung der beiden Signale voneinander nicht über eine große Länge der Referenzstrecke erreicht, sondern dadurch, daß in die Meßstrecke zusätzlich eine Verzögerungsstrecke integriert wird.

Insbesondere ist vorgesehen, daß die Laufzeit der elektromagnetischen Wellen vom Sender zum Empfänger längs der die Verzögerungsstrecke umfassenden Meßstrecke größer ist als die Laufzeit der elektromagnetischen Wellen vom Sender zum Empfänger längs der Referenzstrecke. Sind die Ausbreitungsgeschwindigkeiten der elektromagnetischen Wellen längs der die Verzögerungsstrecke umfassenden Meßstrecke und längs der Referenzstrecke gleich, so bedeutet dies, daß die die Verzögerungsstrecke umfassende Meßstrecke länger ist als die Referenzstrecke. Besonders bevorzugt ist dabei die Laufzeit der elektromagnetischen Wellen vom Anfang der Verzögerungsstrecke zum Ende der Verzögerungsstrecke größer als die Laufzeit der elektromagnetischen Wellen vom Sender zum Empfänger längs der Referenzstrecke. Dies bedeutet bei gleichen Ausbreitungsgeschwindigkeiten längs der Verzögerungsstrecke bzw. längs der Referenzstrecke, daß die Verzögerungsstrecke länger ist als die Referenzstrecke.

Gemäß einer weiteren Lehre der Erfindung ist das erfindungsgemäße Entfernungsmeßgerät, mit dem die weiter oben hergeleitete und aufgezeigte Aufgabe gelöst ist, ausgehend von dem eingangs beschriebenen Entfemungsmeßgerät, dadurch gekennzeichnet, daß eine Mehrzahl von Verzögerungsstrecken vorgesehen ist und jeweils eine der Verzögerungsstrecken der Meßstrecke oder der Referenzstrecke zuschaltbar ist. Dabei ist es grundsätzlich möglich, daß die Verzögerungsstrecken dazu geeignet sind, wahlweise der Meßstrecke oder der Referenzstrecke zugeschaltet zu werden. Gemäß einer bevorzugten Weiterbildung der Erfindung sind jedoch entweder wenigstens zwei unterschiedliche Verzögerungsstrecken vorgesehen, die jeweils nur der Meßstrecke zugeschaltet werden können, oder wenigstens zwei unterschiedliche Verzögerungsstrecken vorgesehen, die jeweils nur der Referenzstrecke zugeschaltet werden können.

Insbesondere ist vorgesehen, daß jeweils eine solche Verzögerungsstrecke zuschaltbar ist, daß bei zugeschalteter Verzögerungsstrecke die Laufzeit der elektromagnetischen Wellen vom Sender zum Empfänger längs der Meßstrekke von der Laufzeit der elektromagnetischen Wellen vom Sender zum Empfänger längs der Referenzstrecke verschieden ist. Dem entspricht bei gleichen Ausbreitungsgeschwindigkeiten der elektromagnetischen Wellen längs der Meßstrecke bzw. längs der Referenzstrecke, daß bei zugeschalteter Verzögerungsstrecke die Länge der Meßstrecke von der Länge der Referenzstrecke verschieden ist. Aufgrund der der Meßstrecke oder der Referenzstrecke zuschaltbaren Verzögerungsstrecken lassen sich für das Nutzsignal bzw. das Referenzsignal somit deutlich unterschiedliche Laufzeiten erzielen.

Erfindungsgemäß wird also eine Mehrzahl von Verzögerungsstrecken bereitgestellt, wobei jeweils genau eine dieser Verzögerungsstrecken als "aktive" Verzögerungsstrecke verwendet wird, indem sie der Meßstrecke oder der Referenzstrecke zugeschaltet wird. Auf diese Weise ist es möglich, für einen sehr großen Bereich von Meßentfernungen, also Entfernungen der Oberfläche, an der das ausgesandte Nutzsignal reflektiert wird, zum Sender bzw. Empfänger, einen deutlichen Laufzeitunterschied zwischen Nutzsignal und Referenzsignal zu erzielen. Wird der zeitliche Abstand zwischen Nutzsignal und Referenzsignal nämlich zu gering, so wird einfach eine längere Verzögerungsstrecke zugeschaltet, so daß wieder hinreichend große zeitliche Abstände zwischen Nutzsignal und Referenzsignal erzielt werden.

Wie weiter oben schon ausgeführt, ist die Erfindung nicht auf die Verwendung eines bestimmten Frequenzbereichs der elektromagnetischen Wellen beschränkt. Gemäß einer bevorzugten Weiterbildung der Erfindung ist jedoch vorgesehen, daß als elektromagnetische Wellen Licht, insbesondere im sichtbaren oder im infraroten Spektralbereich, vorgesehen ist und die Verzögerungsstrecken mittels optischer Schalter zuschaltbar bzw. abschaltbar sind. Insbesondere ist dabei vorgesehen, daß als optische Schalter transmissive LCD-Zelle verwendet werden.

Im einzelnen gibt es nun eine Vielzahl von Möglichkeiten, das erfindungsgemäße Verarbeitungsverfahren für ein Frequenzsignal sowie die erfindungsgemäßen Entfernungsmeßgeräte auszugestalten und weiterzubilden. Dazu wird auf die den unabhängigen Patentansprüchen nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch ein Entfernungsmeßgerät gemäß einem ersten bevorzugten Ausführungsbeispiel der Erfindung, bei dem zwei der Referenzstrecke zuschaltbare Verzögerungsstrecken vorgesehen sind,
- Fig. 2: schematisch ein Entfernungsmeßgerät gemäß einem zweiten bevorzugten Ausführungsbeispiel der Erfindung, bei dem eine Verzögerungsstrecke in der Meßstrecke vorgesehen ist,
- Fig. 3: schematisch das Verarbeitungsverfahren für ein aus einem Zeitsignal gewonnenen Frequenzsignal gemäß einem dritten bevorzugten Ausführungsbeispiel der Erfindung und
- Fig. 4: schematisch den Aufbau eines Entfernungsmeßgeräts gemäß einem vierten bevorzugten Ausführungsbeispiel der Erfindung, das als elektromagnetische Wellen Licht verwendet.

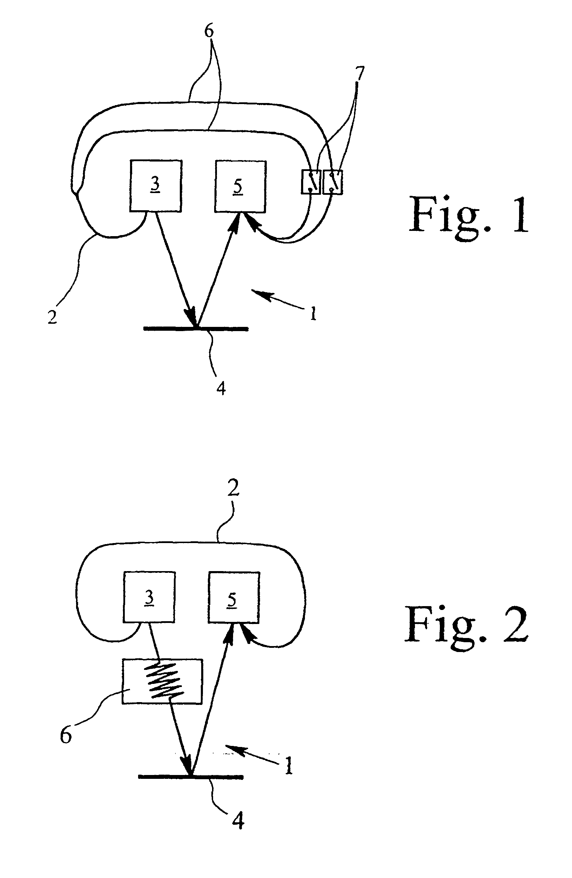

Aus Fig. 1 ist schematisch der Aufbau eines Entfernungsmeßgeräts gemäß einem ersten bevorzugten Ausführungsbeispiel der Erfindung ersichtlich. Das Entfernungsmeßgerät weist eine Meßstrecke 1 und eine Referenzstrecke 2 auf. Die Meßstrecke 1 verläuft von einem Sender 3 hin zu einer Oberfläche 4, an dem das von dem Sender 3 ausgesandte Signal reflektiert wird, zurück zu einem Empfänger 5. Es sind zwei Verzögerungsstrecken 6 vorgesehen, die der Referenzstrecke 2 zuschaltbar sind.

Bei dem aus Fig. 1 ersichtlichen Entfernungsgemäßgerät gemäß dem ersten bevorzugten Ausführungsbeispiel der Erfindung wird als elektromagnetische Wellen Licht im sichtbaren Spektralbereich verwendet. Damit ist es möglich, die Referenzstrecke 2 einschließlich der Verzögerungsstrecken 6 als Lichtwellenleiter auszubilden. Die Zuschaltung bzw. Abschaltung der Lichtwellenleiter 6 zur Referenzstrecke 2 erfolgt über in Fig. 1 nur schematisch angedeutete optische Schalter 7, die als transmissive LCD-Zellen ausgebildet sind.

Wie aus Fig. 1 ohne weiteres ersichtlich, sind die beiden Verzögerungsstrekken 6 unterschiedlich lang. Die äußere bzw. obere Verzögerungsstrecke 6 ist länger als die innere bzw. untere Verzögerungsstrecke 6, so daß abhängig von der Länge der Meßstrecke 1, die durch die Entfernung des Senders 3 von der Oberfläche 4 und weiter zum Empfänger 5 bestimmt wird, immer eine solche Länge der die Verzögerungsstrecke 6 umfassenden Referenzstrecke 2 gewählt werden kann, daß die Laufzeiten des Nutzsignals längs der Meßstrecke 1 bzw. des Referenzsignals längs der Referenzstrecke 2 hinreichend unterschiedlich sind.

Einen außreichend großen Unterschied in der Laufzeit des Nutzsignals längs der Meßstrecke 1 zur Laufzeit des Referenzsignals längs der Referenzstrecke 2 kann gemäß dem aus Fig. 2 ersichtlichen Entfernungsmeßgerät gemäß einem zweiten bevorzugten Ausführungsbeispiel der Erfindung auch dadurch erzielt werden, daß eine Verzögerungsstrecke 6 in die Meßstrecke 1 integriert ist. Dabei ist in Fig. 2 nur schematisch angedeutet, daß die Verzögerungsstrecke 6 gemäß dem zweiten bevorzugten Ausführungsbeispiel der Erfindung eine größere Länge als die Referenzstrecke 2 aufweist. Damit ist unabhängig von der Entfernung der Oberfläche 4, an der das Nutzsignal reflektiert wird, von dem Sender 3 bzw. dem Empfänger 5 gewährleistet, daß die die Verzögerungsstrecke 6 umfassende Meßstrecke 1 länger ist als die Referenzstrecke 2.

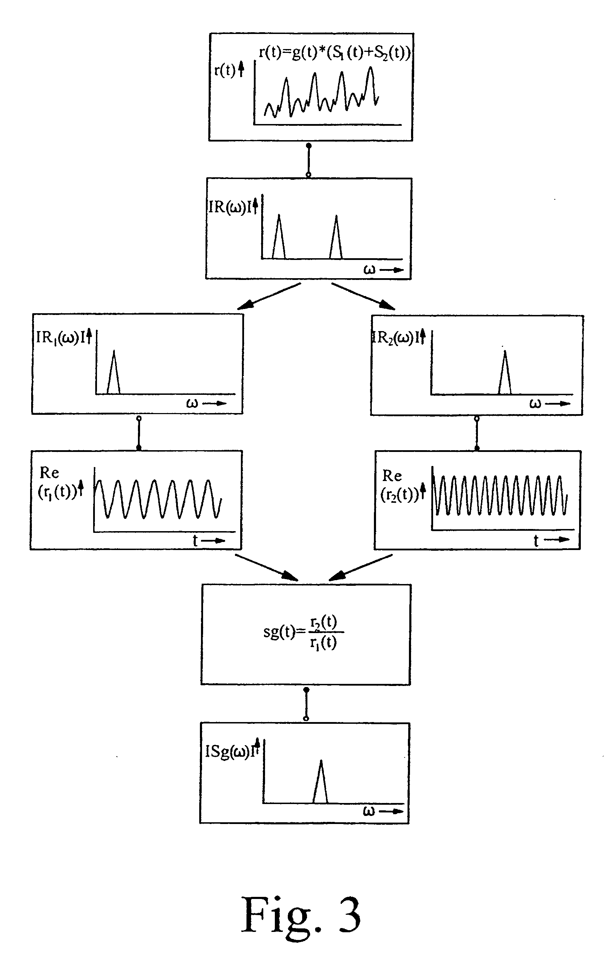

Der Ablauf eines Verarbeitungsverfahrens für ein Frequenzsignal gemäß einem dritten bevorzugten Ausführungsbeispiel der Erfindung ist schematisch in Fig. 3 dargestellt. Das Verarbeitungsverfahren wird am Beispiel eines FMCW-Verfahrens beschrieben. Ganz oben ist das Zeitsignal r(t) dargestellt, das vom Empfänger 5 des Entfernungsmeßgeräts erhalten wird. Das Zeitsignal r(t) ergibt sich durch die Summe aus dem Referenzsignal S₁(t) und dem Nutzsignal S₂(t) multipliziert mit dem Verstärkungsfaktor g(t) des Empfängers 5. Dieses Zeitsignal r(t) wird im Empfänger 5 durch einen nicht weiter dargestellten Mischer erzeugt. Zur Erzeugung des Frequenzsignals, auf das das Verarbeitungsverfahren gemäß dem dritten bevorzugten Ausführungsbeispiel der Erfindung angewandt wird, wird das Zeitsignal r(t) einer Fourier-Transformation unterworfen, so daß ein Frequenzsignal R(ω) erhalten wird. Wie aus Fig. 3 ersichtlich, weist dieses Frequenzsignal R(ω) im wesentlichen zwei Hauptkomponenten auf, die dem Referenzsignal S₁(t) bzw. dem Nutzsignal S₂(t) entsprechen.

Das somit erhaltene Frequenzsignal R(ω) wird nunmehr in zwei voneinander verschiedene Frequenzbereiche aufgeteilt, die jeweils eine der beiden Hauptkomponenten des Frequenzsignals R(ω) aufweisen, so daß zwei Frequenzsignale R₁(ω) und R₂(ω) erhalten werden. Diese beiden Frequenzsignale R₁(ω) und R₂(ω) werden dann jeweils einer Fourier-Transformation unterzogen, womit ein erstes komplexes Zeitsignal r₁(t) und ein zweites komplexes Zeitsignal r₂(t), entsprechend dem Referenzsignal bzw. dem Nutzsignal, erhalten werden. Danach wird das zweite Zeitsignal r₂(t) durch das erste Zeitsignal r₁(t) komplex dividiert, was ein Zeitsignal sg(t) liefert. Dieses Zeitsignal sg(t) wird nun nochmals einer Fourier-Transformation unterworfen, wodurch ein verarbeitetes Frequenzsignal Sg(ω) erhalten wird. Dieses verarbeitete Frequenzsignal ist nunmehr auf das Referenzsignal normiert bzw. kalibriert und kann zur Bestimmung der Entfernung der Oberfläche 4 von dem Sender 3 bzw. dem Empfänger 5 in dem Entfernungsmeßgerät auf bekannte Weise weiter verarbeitet werden.

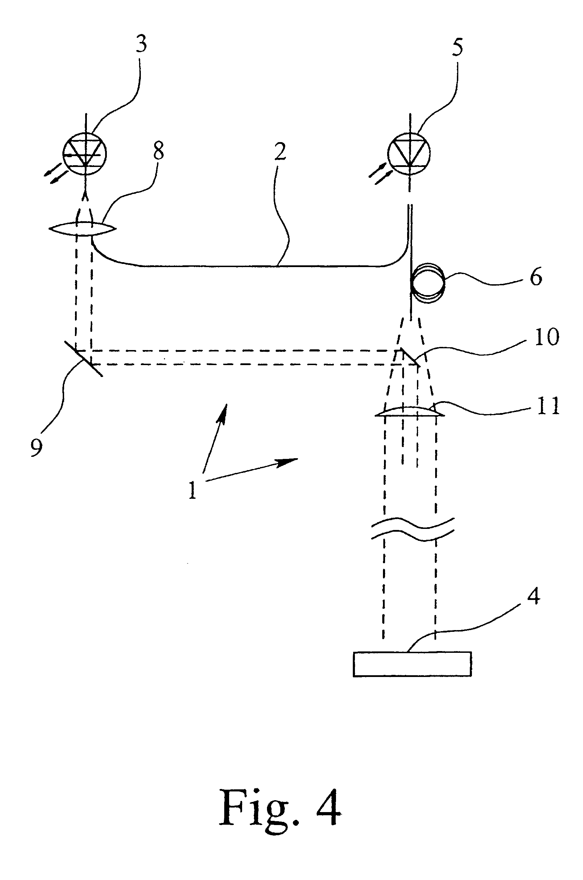

Aus Fig. 4 ist schließlich ein Entfernungsmeßgerät gemäß einem vierten bevorzugten Ausführungsbeispiel der Erfindung ersichtlich, das als elektromagnetische Wellen Licht im sichtbaren Spektralbereich verwendet. Als Sender 3 ist eine Laserdiode vorgesehen. Von der Laserdiode ausgesandtes Licht wird mit Hilfe einer Linse 8 einerseits in die Meßstrecke 1 und andererseits in die Referenzstrecke 2 eingekoppelt. Die Meßstrecke 1 verläuft dann weiter über Umlenkspiegel 9, 10 hin zur Oberfläche 4, an der das Licht zurückreflektiert wird. Das zurückreflektierte Licht fällt dann auf eine Sammellinse 11, mit der es auf den Eingang der Verzögerungsstrecke 6 fokussiert wird. Die Verzögerunsstrecke 6 wird von einem Lichtwellenleiter gebildet. Der Lichtwellenleiter, der die Verzögerungsstrecke 6 bildet, ist, wie aus Fig. 4 zumindest schematisch ersichtlich, wenigstens genauso lang wie der Lichtwellenleiter, der die Referenzstrecke 2 bildet. Auf diese Weise ist immer gewährleistet, daß die Laufzeit des Nutzsignals längs der die Verzögerungsstrecke 6 umfassenden Meßstrecke 1 immer deutlich länger ist als die Laufzeit des Referenzsignals längs der Referenzstrecke 2, so daß das Nutzsignal vom Referenzsignal deutlich getrennt ist und damit das erfindungsgemäße Verfahren problemlos angewandt werden kann.

## Patentansprüche

1. Verarbeitungsverfahren für ein Frequenzsignal, **dadurch gekennzeichnet, daß** das Frequenzsignal in wenigstens zwei Frequenzbereiche, entsprechend zwei Hauptkomponenten des Frequenzsignals, aufgeteilt wird, das Frequenzsignal in den beiden Frequenzbereichen jeweils einer separaten Fourier-Transformation unterzogen wird, wodurch die Fourier-Transformierte des Frequenzsignals in dem einen Frequenzbereich, entsprechend einem ersten komplexen Zeitsignal, und die Fourier-Transformierte des Frequenzsignals in dem anderen Frequenzbereich, entsprechend einem zweiten komplexen Zeitsignal, erzeugt werden, das zweite Zeitsignal durch das erste Zeitsignal komplex dividiert wird, wodurch ein drittes Zeitsignal erzeugt wird, und das dritte Zeitsignal einer Fourier-Transformation unterzogen wird, wodurch ein verarbeitetes Frequenzsignal erzeugt wird.

2. Verfahren nach Anspruch 1, **dadurch gekennzeichnet, daß** das Frequenzsignal ein Nutzsignal, entsprechend der Laufzeit längs einer Meßstrecke (1) und ein Referenzsignal, entsprechend der Laufzeit längs einer Referenzstrecke (2), umfaßt und die beiden Hauptkomponenten des Frequenzsignals dem Nutzsignal bzw. dem Referenzsignal entsprechen.

3. Verwendung des Verfahrens nach Anspruch 2 für die Auswertung einer Entfernungsmessung mittels gepulster elektromagnetischer Wellen oder mittels zeitlich kontinuierlicher, frequenzmodulierter elektromagnetischer Wellen auf der Grundlage des Radarprinzips.

4. Verwendung nach Anspruch 3, **dadurch gekennzeichnet, daß** als elektromagnetische Wellen Licht, insbesondere im sichtbaren oder im infraroten Spektralbereich, verwendet wird und die Meßstrecke (1) und/oder die Referenzstrecke (2) wenigstens teilweise als Lichtwellenleiter ausgeführt sind.

5. Verwendung eines Verfahrens nach einem der Ansprüche 2 bis 4 für ein Entfernungsmeßgerät, zur Entfernungsmessung mittels elektromagnetischer Wellen auf der Grundlage des Radarprinzips, mit einem Sender (3), einem Empfänger (5), einer vom Sender (3) zum Empfänger (5) verlaufenden Meßstrecke (1) und wenigstens einer vom Sender (3) zum Empfänger (5) verlaufenden Referenzstrecke (2), wobei die Meßstrecke (1) eine Verzögerungsstrecke (6) aufweist.

6. Verwendung nach Anspruch 5, **dadurch gekennzeichnet, daß** die Verzögerungsstrecke (6) länger ist als die Referenzstrecke (2).

7. Verwendung nach Anspruch 5 oder 6, **dadurch gekennzeichnet, daß** als elektromagnetische Wellen Licht, insbesondere im sichtbaren oder im infraroten Spektralbereich, vorgesehen ist und die Verzögerungsstrecke (6) als Lichtwellenleiter ausgebildet ist.

8. Verwendung nach einem der Ansprüche 5 bis 7, **dadurch gekennzeichnet, daß** die Referenzstrecke (2) zumindest teilweise, vorzugsweise vollständig, als Lichtwellenleiter ausgebildet ist.

9. Verwendung eines Verfahrens nach einem der Ansprüche 2 bis 4 zur Entfernungsmessung mittels elektromagnetischer Wellen auf der Grundlage des Radarprinzips mit einem Sender (3), einem Empfänger (5), einer vom Sender (3) zum Empfänger (5) verlaufenden Meßstrecke (1) und wenigstens einer vom Sender (3) zum Empfänger (5) verlaufenden Referenzstrecke (2), wobei eine Mehrzahl von Verzögerungsstrecken (6) für die Meßstrecke (1) vorgesehen ist und jeweils eine der Verzögerungsstrecken (6) der Meßstrecke (1) zuschaltbar ist oder daß eine Mehrzahl von Verzögerungsstrecken (6) für die Referenzstrecke (2) vorgesehen ist und jeweils eine der Verzögerungsstrecken (6) der Referenzstrecke (2) zuschaltbar ist.

10. Verwendung nach Anspruch 9, **dadurch gekennzeichnet, daß** jeweils eine solche Verzögerungsstrecke (6) zuschaltbar ist, daß bei zugeschalteter Verzögerungsstrecke (6) die Laufzeit der elektromagnetischen Wellen vom Sender (3) zum Empfänger (5) längs der Meßstrecke (1) von der Laufzeit der elektromagnetischen Wellen vom Sender (3) zum Empfänger (5) längs der Referenzstrecke (2) verschieden ist.

11. Verwendung nach Anspruch 10, **dadurch gekennzeichnet, daß** bei zugeschalteter Verzögerungsstrecke (6) die Länge der Meßstrecke (1) von der Länge der Referenzstrecke (2) verschieden ist.

12. Verwendung nach einem der Ansprüche 9 bis 11, **dadurch gekennzeichnet, daß** als elektromagnetische Wellen Licht, insbesondere im sichtbaren oder im infraroten Spektralbereich, vorgesehen ist und die Verzögerungsstrecken (6) mittels optischer Schalter (7) zuschaltbar bzw. abschaltbar sind.

13. Verwendung nach Anspruch 12, **dadurch gekennzeichnet, daß** als optische Schalter (7) transmissive LCD-Zellen vorgesehen sind.

14. Verwendung nach Anspruch 12 oder 13, **dadurch gekennzeichnet, daß** die Verzögerungsstrecken (6) als Lichtwellenleiter ausgeführt sind.

## Claims

1. Processing method for a frequency signal, **characterised in that** the frequency signal is divided into at least two frequency ranges corresponding to two main components of the frequency signal, the frequency signal in the two frequency ranges is each subjected to a separate Fourier transformation, whereby the Fourier transform of the frequency signal in one frequency range, corresponding to a first complex time signal and the Fourier transform of the frequency signal in the other frequency range corresponding to a second complex time signal are produced, the second time signal is complexly divided by the first time signal, whereby a third time signal is produced, and the third time signal is subject to a Fourier transformation whereby a processed frequency signal is produced.

2. The method according to claim 1, **characterised in that** the frequency signal comprises a useful signal corresponding to the travel time along a measuring section (1) and a reference signal corresponding to the travel time along a reference section (2) and the two main components of the frequency signal correspond to the useful signal and the reference signal.

3. Use of the method according to claim 2 for evaluating a distance measurement using pulsed electromagnetic waves or using temporally continuous, frequency-modulated electromagnetic waves on the basis of the radar principle.

4. The use according to claim 3, **characterised in that** light, especially in the visible or in the infrared spectral range, is used as electromagnetic waves and the measuring section (1) and/or the reference section (2) are at least partly executed as optical waveguides.

5. Use of a method according to any one of claims 2 to 4 for a distance measuring device, for measuring distance using electromagnetic waves on the basis of the radar principle, comprising a transmitter (3), a receiver (5), a measuring section (1) running from the transmitter (3) to the receiver (5) and at least one reference section (2) running from the transmitter (3) to the receiver (5), wherein the measuring section (1) has a delay section (6).

6. The use according to claim 5, **characterised in that** the delay section (6) is longer than the reference section (2).

7. The use according to claim 5 or 6, **characterised that** light, especially in the visible or in the infrared spectral range, is provided as electromagnetic waves and the delay section (6) is constructed as an optical waveguide.

8. The use according to any one of claims 5 to 7, **characterised in that** the reference section (2) is constructed at least partly, preferably completely, as an optical waveguide.

9. The use of a method according to any one of claims 2 to 4 for measuring distance using electromagnetic waves on the basis of the radar principle, comprising a transmitter (3), a receiver (5), a measuring section (1) running from the transmitter (3) to the receiver (5) and at least one reference section (2) running from the transmitter (3) to the receiver (5), wherein a plurality of delay sections (6) is provided for the measuring section (1) and respectively one of the delay sections (6) of the measuring section (1) can be switched in or that a plurality of delay sections (6) is provided for the reference section (2) and respectively one of the delay sections (6) of the reference section (2) can be switched in.

10. The use according to claim 9, characterised that respectively one such delay section (6) can be switched in, that when the delay section (6) is switched in, the travel time of the electromagnetic waves from the transmitter (3) to the receiver (5) along the measuring section (1) differs from the travel time of the electromagnetic waves from the transmitter (3) to the receiver (5) along the reference section (2).

11. The use according to claim 10, **characterised that** when the delay section (6) is switched in, the length of the measuring section (1) is different from the length of the reference section (2).

12. The use according to any one of claims 9 to 11, **characterised in that** light, especially in the visible or in the infrared spectral range, is provided as electromagnetic waves and the delay sections (6) can be switched in or switched off by means of optical switches (7).

13. The use according to claim 12, **characterised in that** transmissive LCD cells are provided as optical switches (7).

14. The use according to claim 12 or 13, **characterised in that** the delay sections (6) are executed as optical waveguides.

## Revendications

1. Procédé de traitement pour un signal de fréquence, **caractérisé en ce que** le signal de fréquence est subdivisé en au moins deux plages de fréquence, correspondant à deux composantes principales du signal de fréquence, le signal de fréquence étant, dans les deux plages de fréquence, chaque fois soumis à une transformation de Fourier séparée, faisant qu'est produite la transformée de Fourier du signal de fréquence, dans une première plage de fréquence, de manière correspondant à un premier signal temporel complexe, et qu'est produite la transformée de Fourier du signal de fréquence dans l'autre plage de fréquence, de manière correspondant à un deuxième signal temporel complexe, le deuxième signal temporel étant divisé de façon complexe par le premier signal temporel, faisant qu'est produit un troisième signal temporel, et le troisième signal temporel est soumis à une transformation de Fourier, faisant qu'est produit un signal de fréquence traité.

2. Procédé selon la revendication 1, **caractérisé en ce que** le signal de fréquence comprend un signal utile, correspondant au temps de parcours d'une distance de mesure (1), et un signal de référence, correspondant au temps de parcours le long d'une distance de référence (2), et les deux composantes principales du signal de fréquence correspondent au signal utile, respectivement au signal de référence.

3. Utilisation du procédé selon la revendication 2, pour l'évaluation d'une mesure d'éloignement, à l'aide d'ondes électromagnétiques pulsées, ou à l'aide d'ondes électromagnétiques modulées en fréquence, temporellement continues, sur la base du principe du radar.

4. Utilisation selon la revendication 3, **caractérisée en ce qu'**on utilise comme ondes électromagnétiques la lumière, en particulier dans la plage spectrale visible et dans les infrarouges, et la distance de mesure (1) et/ou la distance de référence (2) sont réalisées au moins partiellement sous forme de guides d'onde optiques.

5. Utilisation du procédé selon l'une des revendications 2 à 4 pour un appareil de mesure d'éloignement, pour effectuer la mesure d'éloignement à l'aide d'ondes électromagnétiques d'après le principe du radar, avec un émetteur (3), un récepteur (5), une distance de mesure (1) s'étendant de l'émetteur (3) au récepteur (5), et au moins une distance de référence (2) s'étendant de l'émetteur (3) au récepteur (5), la distance de mesure (1) présentant une distance de retardement.

6. Utilisation selon la revendication 5, **caractérisée en ce que** la distance de retardement (6) est plus longue que la distance de référence (2).

7. Utilisation selon la revendication 5 ou 6, **caractérisée en ce qu'**est prévu comme ondes électromagnétiques la lumière, en particulier dans la plage spectrale visible ou des infrarouges, et la distance de retardement (6) est réalisée sous la forme de guides d'onde optiques.

8. Utilisation selon l'une des revendications 5 à 7, **caractérisée en ce que** la distance de référence (2) est réalisée au moins partiellement de préférence, complètement, sous forme de guides d'onde optiques.

9. Utilisation d'un procédé selon l'une des revendications 2 à 4 pour la mesure d'éloignement, à l'aide d'ondes électromagnétiques, d'après le principe du radar, avec un émetteur (3), un récepteur (5), une distance de mesure (1) s'étendant de l'émetteur (3) au récepteur (5), et au moins une distance de référence (2) s'étendant de l'émetteur (3) au récepteur (5), sachant qu'une pluralité de distances de retardement (6) sont prévues pour la distance de mesure (1), et chaque fois l'une des distances de retardement (6) peut être raccordée à la distance de mesure (1) par branchement, ou en ce qu'une pluralité de distances de retardement (6) sont prévues pour la distance de référence (2), et chaque fois l'une des distances de retardement (6) est susceptible d'être raccordée par branchement à la distance de référence (2).

10. Utilisation selon la revendication 9, **caractérisée en ce que** chaque fois une telle distance de retardement (6) est susceptible d'être raccordée par branchement, de manière que, lorsque la distance de retardement (6) est raccordée, le temps de parcours des ondes électromagnétiques, de l'émetteur (3) au récepteur (5), le long de la distance de mesure (1), soit différent du temps de parcours des ondes électromagnétiques de l'émetteur (3) vers le récepteur (5), le long de la distance de référence (2).

11. Utilisation selon la revendication 10, **caractérisée en ce que**, lorsque la distance de retardement (6) est raccordée, la longueur de la distance de mesure (1) est différente de la longueur de la distance de référence (2).

12. Utilisation selon l'une des revendications 9 à 11, **caractérisée en ce qu'**est prévue, comme ondes électromagnétiques, la lumière, en particulier dans la plage spectrale visible ou dans les infrarouges, et les distances de retardement (6) peuvent être ajoutées par branchement, respectivement soustraites par branchement, par des interrupteurs optiques (7).

13. Utilisation selon la revendication 12, **caractérisée en ce que** sont prévus, comme interrupteurs optiques (7), des cellules LCD transmissives.

14. Utilisation selon la revendication 12 ou 13, **caractérisée en ce que** les distances de retardement (6) sont réalisées sous la forme de guides d'onde optiques.
